(19) Europäisches Patentamt
European Patent Office
Office européen des brevets

(11) **EP 4 519 343 B1**

(12) **EUROPEAN PATENT SPECIFICATION**

(45) Date of publication and mention
of the grant of the patent:
**20.08.2025 Bulletin 2025/34**

(21) Application number: **23725862.9**

(22) Date of filing: **24.04.2023**

(51) International Patent Classification (IPC):
**C08G 65/10** (2006.01)    **C08G 65/30** (2006.01)
**C08G 65/26** (2006.01)

(52) Cooperative Patent Classification (CPC):
**C08G 65/2663; C08G 65/2696; C08G 65/30**

(86) International application number:
**PCT/PL2023/050027**

(87) International publication number:
**WO 2023/214891 (09.11.2023 Gazette 2023/45)**

(54) **METHOD FOR THE MANUFACTURE OF A POLYETHER DIOL PRODUCT**

VERFAHREN ZUR HERSTELLUNG EINES POLYETHERDIOLPRODUKTS

PROCÉDÉ DE FABRICATION D'UN PRODUIT DE POLYÉTHER DIOL

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **04.05.2022 EP 22171526**

(43) Date of publication of application:
**12.03.2025 Bulletin 2025/11**

(73) Proprietor: **PCC ROKITA Spolka Akcyjna
56-120 Brzeg Dolny (PL)**

(72) Inventors:
• **HALAMUS, Tomasz
52-120 Wroclaw (PL)**
• **WOJDYLA, Henryk
56-100 Wolów (PL)**
• **PLOCIENIAK, Miroslaw
51-531 Wroclaw (PL)**
• **KORCZAGIN, Igor
50-333 Wroclaw (PL)**

(74) Representative: **AOMB Polska Sp. z.o.o.
ul. Rondo Ignacego Daszynskiego 1
00-843 Warsaw (PL)**

(56) References cited:
**WO-A1-2020/131610        US-A- 5 777 177
US-A1- 2008 021 191**

Remarks:
The file contains technical information submitted after the application was filed and not included in this specification

Processed by Luminess, 75001 PARIS (FR)

**Description**

FIELD OF THE INVENTION

The invention relates to a method for the manufacture of polyether diol products by the continuous addition of starter.

BACKGROUND

The majority of polyether alcohols produced on industrial scale are prepared by anionic base-catalysed oxyalkylation as well as by heterogeneous coordination catalysis, for example by oxyalkylation using a double metal cyanide catalyst (DMC). The DMC complex represents a rather recent class of catalysts for the production of polyether polyols and the term "DMC" commonly refers to the catalyst having at least two metal centers and cyanide ligands.

For many years the base-catalysed process (normally a KOH catalyst) for polymerization of propylene oxide and ethylene oxide was the main method for polyether polyol production. However this anionic polymerization has some limitations in the process and in the properties of the final product including high unsaturation of the product, as well as economic aspects based on production cycle time, purification and filtration. Further disadvantages result from the high concentration of unreacted propylene oxide during the polymerization process, during which monols and aldehydes are generated by isomerization of propylene oxide, causing a profound increase of unsaturation and smell.

US 3 829 505 overcame some of the limitations of the base-catalysed process above by synthesizing high molecular weight polyethers with a DMC catalyst that do not promote in an extensive manner the isomerization of propylene oxide. However, the high cost and high concentration of DMC catalysts and the necessity to remove them from the polyol prevented the widespread application of DMC catalysts for several years. US 10 457 775 describes that removal of the DMC catalyst from the finished polyether is not required for most of the applications when the concentration of the DMC catalyst is 100 ppm or less. The development of new reactive DMC catalysts together with improvements in the alkoxylation process as applied for example by ARCO Chemical Company in the 1990s resulted in a low concentration of the DMC catalyst in the final polyol.

DMC-catalyzed alkylene oxide polymerization processes have been mainly conducted in two different ways.

For example US 6 780 813 describes the preparation of polyether polyols by DMC catalysis by charging a reactor with a starter compound having hydroxyl groups and DMC catalyst followed by introducing propylene oxide into the reactor at about 105°C for polymerization to prepare a polyether polyol. This process is normally referred to as the "conventional DMC process". Disadvantages of the conventional DMC production process of diols include the limitation of the hydroxyl number of the polyether diol product to the ratio of the hydroxyl number of the initiator compound divided by the build ratio and the need for initiator molecules with high molecular weights. In fact, low molecular weight initiator molecules such as glycerin or water cause rapid deactivation of the DMC catalyst. Thus, rather than employing low molecular weight starter molecules directly, oligomeric starters are prepared in a separate process by base-catalyzed alkoxylation of a low molecular weight starter to equivalent weights in the range of 200 Da to 700 Da or higher as described for example in US 2008/0021191 A1.

The second way of conducting DMC-catalyzed alkylene oxide polymerization processes is commonly referred to as the "continuous addition of starter" (CAOS) process developed by Pazos et al. and published in US 5 777 177 and WO 98/03571 A1. In this process, which can be conducted as a batch process, a semi-batch process or a continuous process, a starter is continuously added slowly together with a large excess of the alkylene oxide during the alkylene oxide polymerization. The continuously added starter ($S_c$) can be the same or different from an initial starter ($S_i$) present in the reactor before adding the alkylene oxide. Different from the conventional DMC process, it was now possible to employ even low molecular weight compounds such as water, glycerin or glycols. The low molecular weight compounds could be used as the continuously added starter when an oligomeric initial starter was present in the reactor. Moreover, it was possible to conduct the CAOS process without the initial starter and only adding the low molecular weight molecules as a continuous starter.

One drawback of the CAOS process is the formation of a fraction of low molecular weight material in the final polyether polyol. WO 2017/003748 A1 teaches that these low molecular weight polyols, which have molecular weights lower than 65% of the peak molecular weight and constitute 5 to 15% of the total mass of the polyether polyol can be reduced by "activating a DMC catalyst complex in the presence of i) an alkoxylated starter having a hydroxyl equivalent weight of 50 to 100% of the hydroxyl equivalent weight of the polyether polyol product and ii) up to 10 weight-%, based on the weight of the alkoxylated starter, of 1,2-propylene oxide iii) a low equivalent weight starter is fed continuously to the activated DMC catalyst under polymerization conditions, the feed of low molecular weight starter is continued until 80 to 95% of the alkylene oxide feed in step b) has been completed and the feed of low molecular weight starter is then discontinued while continuing the alkylene oxide feed, wherein the total weight of low molecular weight starter added in step b) is 0.2 to 25% of the total weight of alkylene oxide added in step b)". Thus, WO 2017/003748 A1 teaches that the equivalent molecular weight of the initial starter must be close (100-50%) to the equivalent molecular weight of the final product and that the addition of the continuously added starter should be stopped before the addition of the alkylene oxide is stopped (also referred to as "non-CAOS capping").

WO 2020/131610 A1 discloses a for preparing low viscosity polyoxyalkylene polyols (P) that have a narrow molecular weight distribution. This process comprises reacting a H-functional starter substance (Si), a H-functional starter substance (Sx) and a H-functional starter substance (Sc) with one or more alkylene oxides in the presence of a double metal cyanide catalyst. In WO 2020/131610 A1, during the activation process, pure oxide without Sc primer was added to two Si primers, one is a polymer and the other is glycol or glycerin. An important difference for a person skilled in the art is that WO 2020/131610 A1 uses Si polyol for activation, which already contains an active catalyst. In a process according to claim 1, catalyst in not activated before the process begin - Sc primer id added from the beginning. WO 2020/131610 A1 also does not mentioned that StartOH is larger than PolOH and does not investigate the impact of BR on the amount of water added in the process.

US 2008/021191 A1 discloses a process for the production of a polyether involving establishing oxyalkylation conditions in an oxyalkylation reactor in the presence of from about 5 ppm to about 1,000 ppm, based on the final polyether weight, of a double metal cyanide (DMC) catalyst, continuously introducing into the reactor at least one alkylene oxide and a low molecular weight starter. US 2008/021191 A1 discloses that the acidic environment during the activation and polymerization process reduces the sensitivity of the DMC catalyst to deactivation. In the process according to the present invention applying the acidification after the polymerization process is completed, and yet we can start with wet alkylene oxide without having an active Si starter. US 2008/021191 A1 also does not mentioned that StartOH is larger than PolOH and does not investigate the impact of BR on the amount of water added in the process.

Removal or deactivation of the DMC catalyst from the polyether product after the polymerization has finished may be carried out in different ways, including adsorbing to synthetic silicate such as magnesium silicate or aluminum silicate, treatment with an ion exchange resin and activated clay, or a neutralization method. In the crude polyether as synthesized, there are acetals and ketals which are stable in basic environment, but can be transformed into aldehydes and ketones, which can be easier removed under vacuum as described in US 2006/0167209 A1, ES 2 313 011.

EP 1 767 563 B1 describes a method of extracting and removing water-soluble compounds from a crude unsaturated-group-containing crude polyether polyol made by DMC catalysis having a molecular weight in the range of 1'000 to 100'000 g/mol with 20 to 100 parts by weight of water relative to 100 parts by weight of the crude polyether polyol.

While different low molecular weight compounds can be employed in the CAOS process as continuously added starter, mainly glycols have been used for this purpose, while water has seldomly been used as continuously added starter.

Among the few examples that employ water as the continuously added starter, US 5 777 177 describes an example of a so-called product-to-product CAOS process, in which the molecular weight of the initial starter compound and of the polyether product are substantially the same. However, product-to-product processes are inflexible because they do not allow to prepare polymers with molecular weights that are larger than the molecular weight of the initially added starter.

US 5 777 177 also describes a series of CAOS processes with varying water contents in propylene oxide of 0 ppm, 150 ppm, 250 ppm, and 500 ppm but without providing detailed experimental information. US 5 777 177 does not present a clear influence of the water content on the properties of the polyether products that also have rather high polydispersity indices of 1.51 and above.

According to US 2008/0021191 A1 and US 10 669 368 B2, the water content in the continuously added starter does not have to be controlled suggesting that the influence of water as continuously added starter is unclear. Moreover, according to US 10 669 368 B2, the production of low molecular weight polyol from an initial starter with a hydroxyl number of 112 mg KOH/g to 400 mgKOH/mol with low DMC catalyst levels is possible without controlling the water content in the range of 50 to 6000 ppm in the continuously added starter glycerin or other continuously added low molecular weight starters.

As explained above, water in alkylene oxides has infrequently been used as a continuously added starter $S_c$. In fact, water has not been used systematically as a continuously added starter. This is presumably because glycols are much better soluble in polyether polyols and can be applied at higher concentration than water. However, ethylene glycol, for example, is hazardous to human health. Moreover, it would be desirable to employ a continuously added starter that can be provided with a high purity.

It was therefore an object of the present invention to provide a method for the manufacture of polyethers with low unsaturation and good polydispersity indices, which is improved concerning the use of hazardous substances. It was a further object of the invention to provide a reliable method that is improved concerning the molecular weights of the polyether products that can be obtained, in particular from a given initial starter. It was a further object of the invention to provide a method that can be used with different build ratios, in particular with high build ratios.

Other and further objects, features and advantages of the present invention will become apparent more fully from the following description.

SUMMARY OF THE INVENTION

Some or all of these objects are achieved according to the invention by a method for the manufacture of a polyether diol product having a polyether hydroxyl number PolOH of from 4 to 120 mg KOH/g by reaction of an initial starter substance $S_i$ having two hydroxyl groups (initial starter $S_i$) with one or more alkylene oxides in the presence of water and a double metal cyanide (DMC) catalyst, comprising the steps of

  a. providing a starter mixture, comprising the initial starter $S_i$ and the DMC catalyst,

  b. continuously adding an alkylene oxide to the starter mixture,

  c. continuously adding water to the starter mixture,

wherein

  i. steps b and c either start simultaneously or step b starts before step c, preferably steps b and c start simultaneously,
  ii. the initial starter $S_i$ has a starter hydroxyl number StartOH of from 6 to 250 mg KOH/g,
  iii. the water is added in such an amount that the concentration of the water, based on the total masses of the water and the alkylene oxide, is from 150 ppm to 3500 ppm,
  iv. the build ratio BR, defined as the mass of polyether diol product divided by the mass of initial starter $S_i$ in the starter mixture, is at least 4,
  v. the polydispersity index PDI of the polyether diol product is 1.5 or less, and PDI is calculated as Mw/Mn, wherein Mw and Mn are determined according to DIN 55672-1,
  vi. StartOH is 1.25*PolOH or larger,
  vii. StartOH and PolOH are determined by ASTM D4274-16, met. D,
  viii. the amount of the continuously added water is adjusted such that cH2O, calculated as {100*(total mass of continuously added water in g)/[(total mass of continuously added water in g) + (total mass of continuously added alkylene oxide in g)]} substantially fulfills the equation

$$cH2O = (PolOH - A - B*StartOH)/C \qquad (1),$$

wherein

  A is in mg KOH/g and is calculated as
  A = 0.034*BR + 0.16,
  B is calculated as
  B = 0.0068*(BR)$^2$ - 0.1153*BR + 0.6098,
  C is in mg KOH/g and is calculated as,
  C = -0.3836*(BR)$^2$ + 6.6482*BR + 24.48, and

  ix. the ratio of PolOH/StartOH is in the range between 1 and 1/BR.

With the expression "the amount of continuously added water is adjusted such that cH2O substantially fulfills the equation" is meant that in equation (1) above, the term [(PolOH - A - B*StartOH)/C] can be from about 0.9*cH2O to about 1.1*cH2O. Hence, "cH2O substantially fulfills equation (1)" means that the value of cH2O can be up to about 10% smaller or up to about 10% larger than the ratio [(PolOH - A - B*StartOH)/C].

According to the invention, it has thus surprisingly been found that by adjusting the total amount of continuously added water as explained above, polyether diol products with low unsaturation and good polydispersity indices, in particular with polydispersity indices of 1.5 and below, can be obtained without the use of hazardous substances as continuously added starter. In particular, it is possible with the method according to the invention to prepare with good build ratios polyether diol products having hydroxyl numbers PolOH from initial starter compounds having hydroxyl numbers StartOH, wherein the ratio StartOH/PolOH is larger than 1, for example from 1.25 to 10. Moreover, the method reliably yields polyether diols, in particular also on an industrial scale.

Hydroxyl numbers given herein are determined according to ASTM D4274-16, met. D.

DETAILED DESCRIPTION

According to the present invention, the method comprises

a. providing a starter mixture comprising the initial starter substance $S_i$ having two hydroxyl groups and the DMC catalyst.

The initial starter substance $S_i$ having two hydroxyl groups is herein also referred to as initial starter $S_i$. The starter mixture can optionally be stripped under vacuum. The vacuum stripping can occur with or without nitrogen and/or steam. This starter mixture is typically formed in a reactor. The portion of DMC catalyst and initial starter $S_i$ is effective to initiate polyoxyalkylation of the starter mixture once an alkylene oxide is introduced into the reactor.

The method of the invention requires two different types of starters: an initially charged starter substance $S_i$ having two hydroxyl groups and water that is continuously added. The initially charged starter substance $S_i$ is different from water.

Suitable initial starters $S_i$ to be used in accordance with the present invention include, for example, a polyether diol product having a hydroxyl number StartOH of from 6 to 250 mg KOH/g, advantageously from 14 to 250 mg KOH/g, preferably from 9 to 112 mg KOH/g, more preferably from 17 to 56 mg KOH/g.

Advantageously, StartOH is 1.25*PolOH or larger, preferably from 1.25*PolOH to 15*PolOH, more preferably from 1.25*PolOH to 10*PolOH, most preferred from 1.25*PolOH to 7*PolOH.

When the initial starter $S_i$ of the starter mixture comprises a polyether diol, this polyether diol can be a known residual amount of the product left in the reactor from a prior batch of the same product. This polyether diol may be prepared from the same reactants as the final product prepared by the method of the invention, have the same functionality, molecular weight and hydroxyl number as the final product resulting from the method of the present invention, and thus be essentially the same as the final product prepared by the instantly claimed method. The skilled artisan would, however, recognize that it is not actually the same product as the final product since it was prepared in a different lot or reactor batch. As an example, after completion of the production of a batch of polyether diol product in a reactor by DMC catalysis, 90% of the product is removed from the reactor. The remaining 10% of the polyether diol product can be left in the reactor and used as the initial starter $S_i$ of the starter mixture of the present invention. It is also possible that the initial starter $S_i$ of the starter mixture can comprise a final polyether diol product that is stored in a finished goods storage vessel from a previous campaign which can be brought back into the reactor as the initial starter $S_i$ of the starter mixture.

The initial starter $S_i$ of the starter mixture can also comprise a final polyether diol product that has a similar molecular weight as the target product that was made using any alkoxylation catalyst known in the art, examples are basic catalysts (KOH or equivalent) and acid catalysts (Lewis acid or Bronsted acid induced catalysis), and which was refined to remove or neutralize the basic or acidic catalyst. The use of a basic catalyzed and subsequently neutralized polyether diol product is necessary, for example, when using this product as the initial starter $S_i$ for the initial or first production of the polyether diol product. Removal or neutralization of the basic catalyst from the final polyether diol product to be used as the initial starter $S_i$ is required, as those skilled in art will recognize, because even trace levels of base or alkalinity deactivates and/or inhibits the DMC catalyst present in the starter mixture. In all cases, when a polyether diol is used as the initial starter $S_i$, the polyether diol acts as a reaction medium to provide the minimum starter charge required by the reactor configuration (e.g. cover agitator blade, fill recirculation loop, cover internal heating/cooling coils, etc.).

In one embodiment, the polyether diol which is used as the initial starter $S_i$ of the starter mixture has a hydroxyl number StartOH that is larger than the polyether hydroxyl number PolOH of the targeted final polyether diol product.

In another embodiment, where water concentration in the alkylene oxide is high the polyether diol used as the initial starter $S_i$ of the starter mixture does not substantially participate in the reaction. The minimization of the molecular weight growth of the initial starter $S_i$ of the starter mixture which comprises a polyether diol provides the opportunity to produce a final product with a low viscosity. It may also yield a narrow molecular weight distribution, in particular for higher molecular weight polyols.

In another embodiment, this initial starter $S_i$ of the starter mixture may comprise a polyether diol that contains DMC catalyst residuals. In another embodiment, the DMC catalyst residuals were previously exposed to alkylene oxide. In another embodiment, the DMC catalyst residuals of the polyether diol used as the initial starter $S_i$ of the starter mixture were previously exposed to alkylene oxide under reaction conditions ("pre-activated" catalyst).

The initial starter $S_i$ comprising a polyether diol can contain antioxidants and/or acids known to those skilled in the art. For example, suitable antioxidants for polyoxyalkylene polyols include sterically hindered phenolic compounds such as BHT (i.e. butylated hydroxytoluene), octadecyl 3-(3,5-di-tert-butyl-4-hydroxyphenyl) propionate (i.e. Irganox 1076), 3,4-dihydro-2,5,7,8-tetramethyl-2-(4,8,12-trimethyltridecyl)-2H-1-benzopyran-6-ol (i.e. Irganox E-201), etc. Examples of suitable acids include any inorganic protic mineral acid or organic acid which is known to be suitable as described in the art. Phosphoric acid is an example of a suitable acid.

The initial starter $S_i$ which may comprise a polyether diol can be vacuum stripped, with or without steam and/or nitrogen, to remove any residual compounds introduced from the reaction or the raw materials including water. Stripping of the initial starter $S_i$ can occur either before or after the addition of the DMC catalyst. Vacuum stripping of the initial starter $S_i$ can occur with or without steam and/or nitrogen at ambient temperature, reaction temperature, or any value in between.

Optionally, the initial starter $S_i$ which may comprise a polyether diol can also be treated by inert gas stripping, in particular nitrogen gas stripping, which can occur at ambient pressure or by applying vacuum at ambient temperature, reaction temperature, or any value in between.

According to the method of the invention, the build ratio BR, defined as the mass of polyether diol product divided by the mass of initial starter $S_i$ in the starter mixture, is at least 4. Advantageously, the build ratio is from 4 to 20, preferably from 4 to 15, more preferably from 5.5 to 10, even more preferably from 5.5 to 8.5, most preferred from 7.5 to 8.5. However, the skilled person can conceive build ratios that are higher than 20.

Suitable double metal cyanide catalysts for the present invention include any DMC catalysts known in the art. The well-known DMC catalysts are typically the reaction product of a water-soluble metal salt (e.g. zinc chloride) and a water-soluble metal cyanide salt (e.g. potassium hexacyanocobaltate). The preparation of DMC catalysts is described in various references, including, for example, U.S. Patent 5,158,922, 4,477,589, 3,427,334, 3,941,849, 5,470,813 and 5,482,908, EP 0 700 949 A2, EP 0 743 093 A1, EP 761 708 A2, WO 97/40086 A1, WO 98/16310 A1 and WO 00/47649 A1, EP 1 789 378 A2, or CN 100 999 573 A.

Particular DMC catalysts that are preferred in some embodiments of the present invention are zinc hexacyanocobaltates. In one embodiment, the DMC catalysts are amorphous. The DMC catalyst includes an organic complexing agent. As taught in the preceding references, the complexing agent is needed for an active catalyst. Preferred complexing agents include water-soluble heteroatom-containing organic compounds that can complex with the DMC compound. In one embodiment, the preferred complexing agents are water soluble aliphatic alcohols. Tert-butyl alcohol is a preferred complexing agent for some embodiments. In addition to the organic complexing agent, the DMC catalyst may also include a polyether as is described in U.S. Patent 5,482,908.

Preferred DMC catalysts for use in accordance with one or more embodiments of the present method are the highly active DMC catalysts such as are described in PL 398518 A1, EP 0 700 949 A2, EP 0 743 093 A1, EP 761 708 A2, WO 97/40086 A1, WO 98/16310 A1 and WO 00/47649 A1 and CN 100 999 573 A, US 5,482,908 or US 5,470,813 or the ARCOL CATALYST 3 (DRY) ® catalyst from Covestro. High activity allows for the use of very low concentrations of the catalyst to be used. More specifically, the concentrations of catalyst required is typically low enough to overcome or eliminate any need to remove the catalyst from the finished polyether diol products formed in the method. In particular, the concentration of catalyst in the finished polyether diol product is typically in the range of from 10 ppm to 300 ppm, or from 20 ppm to 200 ppm, or from 30 ppm to 100 ppm.

The DMC catalyst can be added as a dry powder directly to the starter mixture, or dispersed in the initial starter $S_i$ and added to the starter mixture. The DMC catalyst added to the starter mixture can be the same as the DMC catalyst residual contained in the polyoxyalkylene polyol used as the initial starter $S_i$ of the starter mixture or can be different therefrom. Preferably, the DMC catalyst added to the starter mixture is the same as the DMC catalyst residual contained in the polyoxyalkylene polyol used as the initial starter $S_i$ of the starter mixture. The DMC catalyst added to the starter mixture can be un-activated or fresh catalyst, i.e. catalyst that has not previously been exposed to alkylene oxide, catalyst that has been exposed to alkylene oxide under non-reaction conditions (i.e. temperature < 90°C); or "pre-activated" catalyst, i.e. catalyst that was previously exposed to alkylene oxide under reaction conditions (i.e. temperature $\geq$ 90°C). The DMC catalyst residuals in the polyether diol initial starter $S_i$ of the starter mixture are considered "pre-activated" catalyst as this catalyst was exposed to alkylene oxides under reaction conditions during the making of the polyether diol initial starter $S_i$ of the starter mixture. The "pre-activated" catalyst in the polyether diol initial starter $S_i$ of the starter mixture is advantageous to the present invention to allow a rapid activation of the starter mixture when alkylene oxide is added. The combination of "pre-activated" catalyst from the polyether diol initial starter $S_i$ of the starter mixture and fresh or "pre-activated" catalyst added to the starter mixture also insures a good reaction (i.e. no rapid pressure increase or temperature fluctuations) when the continuously added water is added. The DMC catalyst added to the starter mixture can be the same as or different from the residual catalyst or "pre-activated" catalyst in the polyether diol initial starter $S_i$ of the starter mixture.

The DMC catalyst (which may be fresh catalyst or pre-activated catalyst) is typically added to the starter mixture. It can, however, also be split between the starter mixture and the continuously added starter or continuously added separately. Splitting the DMC catalyst provides a lower initial catalyst concentration in the starter mixture, and a more uniform catalyst concentration during the production of the polyether diol product.

In the method of the present invention, the DMC catalyst present in the starter mixture may be activated in the presence of alkylene oxide. Activation of the DMC catalyst present in the starter mixture may occur by optionally adding an activation amount of an alkylene oxide to the starter mixture provided in step a. The activation step is preferably conducted before steps b and c. The alkylene oxide for the activation of the starter mixture can be added all at once in the activation step to the initial starter $S_i$ and DMC catalyst mixture of step a wherein the pressure in the reactor system will increase rapidly, or the alkylene oxide can be slowly added, for example during the initial ramp-up of the alkylene oxide feed in step b wherein the pressure in the reactor system will increase slowly.

The activation of the DMC catalyst present in the starter mixture may be detected for example when the pressure decreases to half of the amount of the peak pressure detected in the case of the rapid addition of the alkylene oxide, or when the pressure begins to decrease and the reactor system begins to cool the reaction (indicating the presence of a reaction) in the case of slow addition of the alkylene oxide.

The amount of alkylene oxide added for activation is from 2 to 40 wt.%, preferably from 2 to 20 wt.%, based on the amount of the initial starter $S_i$ present in the starter mixture. As used herein, the amount of alkylene oxide necessary to activate the DMC catalyst present in the starter mixture of step a may be referred to as the "initial" or "activation" alkylene oxide. The alkylene oxide in the activation amount preferably has a water content below 200 ppm, preferably below 150 ppm, more preferably below 50 ppm.

According to a preferred embodiment, the method additionally comprises before steps b and c an activation step of adding an activation amount of an alkylene oxide having a water content below 200 ppm, preferably below 150 ppm, more preferably below 50 ppm, to the starter mixture to initiate the double metal cyanide catalyst.

When an activation step is present in the method according to the invention, the activation step advantageously has a duration of from 1 to 100 minutes, preferably from 5 to 60 minutes. When present, the activation step is advantageously conducted at a temperature from 90°C to 170°C, preferably from 100°C to 160°C, more preferably from 125°C to 150°C. When an activation step is present, the activation amount of alkylene oxide advantageously amounts to 2 wt.% to 40 wt.%, preferably 2 to 20 wt.%, based on the amount of initial starter $S_i$.

The method of the invention additionally comprises the step b of continuously adding an alkylene oxide to the starter mixture after activation with the activation amount of alkylene oxide when an activation step is present or to the starter mixture of step a when an activation step is not present. This continuous addition may comprise starting and increasing the addition of alkylene oxide in a steady manner until the final target feed rate of alkylene oxide is reached. The ramp-up of the alkylene oxide feed(s) may take from 5 minutes to 10 hours before reaching the final target feed rate(s).

The total time of addition of the continuously added alkylene oxide in the method according to the invention may vary. Advantageously, the total time of addition of the continuously added alkylene oxide is from 8 to 20 hours, preferably from 9 to 18 hours, more preferably from 10 to 15 hours. The alkylene oxide can in particular also be added at an average rate of 1 to 20 wt.%, preferably 5 to 15 wt.%, of the total amount of alkylene oxide, per hour.

Different alkylene oxides may be used in the method according to the invention. Advantageously, the alkylene oxide is selected from the group consisting of ethylene oxide, propylene oxide, butylene oxide, styrene oxide, and mixtures thereof. Preferably, the alkylene oxide is selected from the group consisting of ethylene oxide, propylene oxide, and mixtures thereof. More preferably, the alkylene oxide is propylene oxide.

In one or more embodiments of the present method, the quantity of the initial starter $S_i$ used depends on many factors, including, for example, the reactor dimensions, the identity of the initial starter $S_i$, the hydroxyl number of the initial starter $S_i$ and of the target polyether diol product, and other factors such as the minimum quantity of initial starter $S_i$ needed to achieve proper mixing based on agitator and/or heat exchanger loop configuration. The amount of continuously added water is within the range of about 3 mole % to about 95 mole %, or from 30 mole % to 90 mole %, in particular for a build ratio of 8 to 9, based on the total amount of hydroxyl-equivalent moles of initial starter $S_i$ and water, which may also be referred to as the total amount of starter substances (St). The total amount of starter substances (St) equals the sum of the amount of continuously added water plus the amount of initially charged initial starter $S_i$. Thus, $S_t = S_c + S_i$.

The alkylene oxide composition may also be varied during the initial polymerization of the initial starter $S_i$ and/or at some point during and/or after the addition of the continuously added water. This provides flexibility for controlling the distribution of alkylene oxides within the polyether diol product and allows some control of the primary versus secondary hydroxyl functionality of the polyether diol product, and thus, the relative reactivity of the final composition. In this way, it is possible to design the product to meet the reactivity and performance requirements of the intended applications such as polyurethane foams, sealants, adhesives and coatings.

The continuously added alkylene oxide and the continuously added water are advantageously added at a

$$\text{ratio R = mass(water)/mass(alkylene oxide)},$$

wherein during addition of the water and the alkylene oxide the ratio R remains substantially constant or is variable, preferably is variable in the range from 1 to 3500 ppm, preferably from 150 to 3500 ppm.

The continuously added water and the continuously added alkylene oxide may be added separately to the starter mixture. The continuously added water and the continuously added alkylene oxide may also be intimately mixed before being added to the starter mixture. Mixing of the water and the alkylene oxide may occur outside or inside of a reaction vessel in which the polyether diol product is manufactured. By mixing the water and the alkylene oxide, a wet alkylene oxide is obtained. The wet alkylene oxide may have a water concentration of from 150 ppm to 3500 ppm, based on the combined masses of the water and the alkylene oxide. The water concentration of the wet alkylene oxide may be varied or may be constant during addition of the wet alkylene oxide. Preferably, the water concentration of the wet alkylene oxide remains substantially constant. The water and the alkylene oxide may be mixed in a separate reactor to obtain the wet alkylene oxide. The water and the alkylene oxide may also be mixed using a static mixer device. For example, the water supply line may be connected to the alkylene oxide supply line via a static mixer device such that after the static mixer device, wet alkylene oxide is supplied to the reaction vessel in which the polyether diol product is manufactured.

According to a preferred embodiment, a monomer mixture comprising an alkylene oxide and water are added continuously to the starter mixture, wherein the water in the monomer mixture is at a concentration in the range from 1 to 3500 ppm, preferably from 150 ppm to 3500 ppm, based on the combined masses of the water and the alkylene oxide. The concentration of the water in the monomer mixture may be varied or may be constant during addition of the monomer mixture. According to an embodiment, the concentration is substantially constant during addition of the monomer mixture. According to another embodiment, the concentration is variable during addition of the monomer mixture, preferably is variable in the range from 1 to 3500 ppm, more preferably from 150 to 3500 ppm.

According to an embodiment, the ratio R or the concentration reduced to 1 to 150 ppm after 85 wt.% or more, preferably 90 wt.% or more, more preferably 95 wt.% or more of the alkylene oxide have been added. This may also be referred to as "non-CAOS end cap".

In an embodiment of the invention, a solvent may be included to reduce the process viscosity. This solvent may be introduced to the reactor with the starter mixture comprising the initial starter $S_i$ and the DMC catalyst. The solvent may or may not be removed from the polyether diol product. The solvent preferably does not have a proton that is active in DMC catalysis such as a proton from a hydroxyl group or a proton from an amine group.

The method according to the invention may be used to manufacture polyether diol products with different hydroxyl numbers. The polyether diol product manufactured with the method according to the invention has a polyether hydroxyl number PolOH of from 4 to 120 mg KOH/g. Advantageously, the polyether diol product has a polyether hydroxyl number PolOH from 4 to 112 mg KOH/g, preferably from 5 to 60 mg KOH/g, more preferably from 5 to 30 mg KOH/g, most preferably from 5 to 15 mg KOH/g.

The polyether diol product according to the invention has a polydispersity index PDI of 1.5 or less. Advantageously, the polydispersity index PDI is 1.3 and below, preferably 1.15 and below, more preferably from 1.05 to 1.15.

In accordance with the present invention, the method may be carried out in a stainless steel reaction vessel (e.g. 5 Liter or larger) equipped with an electrically heated jacket and an internal coil that can be used for heating or cooling the reaction mixture. Steam, water or a combination of the two may be passed through the cooling coil to control the reaction temperature. Tempered water or a hot oil system may also be used to control the temperature. The reactor system preferably includes a mechanical agitator that may be equipped with a single agitating device such as a gate-type mixer or an anchor type mixer or other such devices known to those skilled in the art. The agitator may also be equipped with one or multiple mixers such as pitched blade impeller, Rushton-type impeller, flat blade, curved blade, tilted blade or other such devices known to those skilled in the art. The various types of blades may be used individually or in combination with one another. It is not necessary for the agitator blade to directly agitate the liquid surface at all times, particularly during the addition of the alkylene oxide. When the agitator directly agitates the liquid surface of the reaction mixture in the production of a polyether diol product with a low hydroxyl number, this can result in the product having a lower polydispersity. The agitator speed may be constant or varied during the batch. The reactor internals may include baffles. The reactor may also be equipped with a recirculation pump loop that withdraws the reaction mixture from the bottom portion of the reactor and pumps the reaction mixture back into the reactor, or example through a dip tube or spray nozzle in the upper part of the reactor or through a dip tube or sparge ring at the bottom part of the reactor. The recirculation loop may include a heat exchanger for temperature control or may include a static mixing device. In one embodiment, the reactor can be a loop reactor equipped with a jet mixer. The loop reactor preferably comprises a heat exchanger for temperature control. The loop reactor may comprise a static mixing device. Loop reactors are described for example in WO 2020/131610 A1 and in EP 2 065 427 A1. The reactor and associated metering and monitoring equipment are preferably connected to a digital process control system.

The reactor system preferably includes an alkylene oxide dosing system for one or more alkylene oxide feeds (e.g. propylene and/or ethylene oxide). When more than one alkylene oxide is used, the alkylene oxides may be introduced to the reactor together or separately. They may be mixed and added together, or they may be stored separately and mixed using a static mixing device before being introduced to the reactor. The alkylene oxides may be introduced into the headspace of the reactor through a dip tube or spray nozzle or into the liquid phase in the reactor through a dip tube or sparge ring. The mixing impellers may be optimized to match the location of alkylene oxide addition to provide a high shear / mixing zone near the alkylene oxide injection location. The alkylene oxides may also be introduced to the recirculation line directly orvia a static mixing device. In one embodiment that employs a loop reactor, the alkylene oxides may also be introduced to the recirculation line of the loop reactor.

The reactor system preferably includes a dosing system for the continuously added water. The continuously added water may be introduced into the headspace of the reactor through a dip tube or spray nozzle or into the liquid phase in the reactor through a dip tube or sparge ring. The mixing impellers may be optimized to match the location of the continuously added water addition point to provide a high shear / mixing zone near the continuously added water injection location. The continuously added water can also be introduced to the recirculation line directly or via a static mixing device. The continuously added water may also be premixed with the alkylene oxide yielding wet alkylene oxide and the wet alkylene oxide is then introduced to the reactor directly via a dip tube or sparge ring or via a static mixing device. In one embodiment that employs a loop reactor, the water may also be introduced to the recirculation line of the loop reactor.

The finished polyether diol product of the present invention containing residual DMC catalysts may be vacuum stripped with steam and/or nitrogen to remove any residual compounds introduced from the reaction or the raw materials. Advantageously, the polyether diol product contains the DMC catalyst at a concentration of less than about 400 ppm, preferably less than about 300 ppm, more preferably less than about 100 ppm.

The finished polyether diol product may also be inhibited with antioxidants known to the skilled artisan for polyether polyols. Examples of suitable antioxidants for polyoxyalkylene polyols include sterically hindered phenolic compounds such as BHT (i.e. butylated hydroxytoluene), octadecyl 3-(3,5-di-tert-butyl-4-hydroxyphenyl) propionate (i.e. Irganox 1076), 3,4-dihydro-2,5,7,8-tetramethyl-2-(4,8,12-trimethyltridecyl)-2H-1-benzopyran-6-ol (i.e. Irganox E-201), or other equivalent antioxidants or inhibitors.

The finished polyether diol product may also be acidified with an acid. Advantageously, an acid is added to the polyether diol product after all of the alkylene oxide has been added to adjust the pH to a value below 7.0, preferably to a value of 5 to 6.9, more preferably from 5.8 to 6.8. The pH value is advantageously determined by preparing a solution by dissolving 10 g of the polyether diol product in 60 mL of a mixture of isopropanol : water at a weight ratio of 10:6 and determining the pH value using a potentiometric pH meter. The acid may be an organic acid or an inorganic acid which is known to be suitable as described in the art, preferably an inorganic acid, more preferably phosphoric acid. The acid may be added as a solution in a solvent, preferably as an aqueous solution. The acid may be added at a concentration of 1 to 100 ppm, preferably 1 to 50 ppm, based on the finished polyether diol.

The finished polyether diol product is preferably inhibited with an antioxidant prior to stripping, with or without steam and/or nitrogen. Additional inhibitor may be added after the stripping, with or without steam and/or nitrogen, and any acid addition, if required, is preferably added after the stripping, with or without steam and/or nitrogen. The final inhibitor and/or acid may be added directly to the stripping vessel, or to the storage vessel, or may be continuously added to the product in the transfer line between the stripping vessel and the storage vessel. Alternatively, the polyether diol product may be stored with only antioxidant and any required acid may be added to the storage vessel prior to shipment or to the shipping container, either directly to the container or added continuously to the transfer line between the storage vessel and the shipping container or prior to the final product use.

EXAMPLES

### Materials:

A double metal cyanide (DMC) catalyst according to PL398518A1, or CN 100 999 573 A, US 5,482,908 or US 5,470,813 were employed.

The propylene oxide was obtained from PCC Rokita SA and had a purity of 99.9% and a water content of 200 ppm or less.

### Methods:

**Hydroxyl numbers** were measured according to ASTM D4274-16, met. D.

### Gel Permeation Chromatography.

Number average molecular weight Mn and weight average molecular weight Mw were measured by gel permeation chromatography (GPC). GPC was performed according to DIN 55672-1: "Gel permeation chromatography, part 1 - tetrahydrofuran as eluent" using an Agilent Technologies 1260 gel permeation chromatography system. The following data processing device was used: Cirrus GPC offline ver. 3.4.1. The following cross-linked polystyrene columns were used: 2 x Plgel 3 $\mu$m Mixed -E, 300x7,5 mm, Guard 3 $\mu$m, 50 x 7,5mm. Temperature: 40 ° C, detector: RID, Solvent: Tetrohydrofuran, Flow rate 1 ml / min. As standard sample for creating the calibration curve, Polystyrene standards (SPSS) were used. The polydispersity index (PDI) was calculated as PDI=Mw/Mn.

**Unsaturation of the polyethers** was measured according to ASTM D4671-16 met. A.

**The water content in the propylene oxide** was measured according to the method PN-ISO 760, which is a Karl Fischer method, on a compact titrator for coulometric water determination (model: 917 Coulometer Metrohm with generator electrode with diaphragm). Catholyte for coulometric Karl Fischer titration (methanol-based) was HYDRANAL™ - Coulomat CG. Anolyte for coulometric Karl Fischer titration (methanol-based), for cells with and without diaphragm was HYDRANAL™ - Coulomat AG. For sampling propylen oxide, Neotecha Sapro system was applied Together with Gas tight syringes (1000 series syringes by Hamilton): 1ml, 2.5ml, and 5 ml

### Viscosity

Viscosity was measured according to ASTM D4878-08, test A.

Synthesis Examples 1-27

General synthetic procedure is described below. All syntheses described in the synthesis examples below were carried out in the same fashion, the only process variables were: type of initial starter (Si), with properties listed in Table 1; DMC catalyst concentration; continuously added amount of water (cH2O) and build ratio (BR).

General synthetic procedure:

A reactor was fed with the appropriate starter Si (see Table 1 and 2) and with DMC catalyst at a concentration ranging between 25 and 100 ppm, based on the final product (the concentration was adjusted in order to maintain the comparable process kinetics). The resulting mixture (the "starter mixture") was heated under protective gas atmosphere (e.g. nitrogen) with stirring, and finally nitrogen flow was maintained under vacuum in order to reduce the oxygen content below the concentration for safe operation. Then the temperature of the mixture was increased above 110 °C but lower than 160 °C and dry propylene oxide in the amount of up to 20 wt% of the amount of Si starter corresponding to 2 to 5 wt.%, based one the total amount of propylene oxide adde, was continuously added until an accelerated pressure loss was observed in the reactor (activation step). This accelerated pressure loss indicated that the catalyst was activated. After catalyst activation has been observed, the remainder of the 20 wt.% of the dry propylene oxide was fed, in such a way that the reaction temperature was kept below 160 °C.

Then the continuous feed of water and propylene oxide in the form of wet propylene oxide were started, with a total water concentration (cH2O) and build ratio (BR) as defined in Table 2, and continued over a duration of 10-15 hours with increasing ramping of the feed rate, where the final feeding rate was higher than the initial feeding rate. During the feeding of the mixture of propylene oxide and water the pressure in the reactor was kept below 5 bar by adjusting the feeding rate of propylene oxide, and the pressure was decreased by increasing the feeding time of propylene oxide. Unless written otherwise in Table 2, the concentration of water in propylene oxide was constant during the whole feed process. After addition of all the wet propylene oxide, the resulting mixture was stirred for 2 hours above 100 °C. Then the mixture was degassed, optionally under vacuum for at least 1 hour. Then, the mixture was cooled below 90 to 100 °C. Then at least 0.5 wt% of demineralized water were fed or alternatively between 1 and 50 ppm of phosphoric acid were fed to deactivate the catalyst and treat possible by-products, and the resulting mixture was then stirred for at least 1h hour. Then, water and the volatile constituents were distilled off at a temperature below 150°C, with stirring, and finally the reactor was purged with nitrogen under vacuum followed by cooling the mixture to 90°C.

The properties of obtained polyols are given in Table 3.

**Table 1.** Properties of diols initial starters (Si) used in Examples 1-27, where Mn: number average molecular weight calculated as 56110x2/OH number; StartOH: hydroxyl numbers measured according to ASTM D4274-16, met. D.

| Starter | Mn [g/mol] | StartOH [mgKOH/g] | Comments |
|---|---|---|---|
| Si-1 | 6033 | 18.6 | Homopolymer diol propylene oxide, |
| Si-2 | 6601 | 17.0 | |
| Si-3 | 2070 | 54.2 | |
| Si-4 | 6376 | 17.6 | Activated starter containing 360ppm DMC, Homopolymer diol propylene oxide |
| Si-5 | 2004 | 56.0 | Homopolymer diol propylene oxide, |
| Si-6 | 1020 | 110 | |
| Si-7 | 3411 | 32.9 | |
| Si-8 | 449 | 250.0 | |
| Si-9 | 6234 | 18.0 | |
| Si-10 | 2078 | 54.0 | |
| Si-11 | 1002 | 112 | |

**Table 2. Polyether homopolymers diols by continuous addition of water: synthesis examples from 1- to 27**

| No. | Si[a] | H2O[b] | BR[c] |
|---|---|---|---|
| 1 | Si-1 | 718 | 8.4 |

(continued)

| No. | Si[a] | H$_2$O[b] | BR[c] |
|---|---|---|---|
| 2[e] | Si-1 | 705 | 8.4 |
| 3[e] | Si-1 | 1450 | 8.6 |
| 4[f] | Si-2 | 2750 | 6 |
| 5[d] | Si-1 | 1529 | 8 |
| 6[e] | Si-3 | 614 | 8.4 |
| 6a[e,g] | Si-5 | 1096/ 150 | 8.4 |
| 7[h] | Si-4 | 2170 | 6 |
| 8[e] | Si-5 | 1320 | 8.4 |
| 9[e] | Si-6 | 157 | 8.6 |
| 10[e] | Si-7 | 370 | 8.4 |
| 11[d] | Si-5 | 1799 | 6 |
| 12[e] | Si-6 | 913 | 8.4 |
| 13 | Si-6 | 3000 | 8.4 |
| 14 | Si-8 | 151 | 8.4 |
| 15 | Si-8 | 1821 | 8.4 |
| 16[e] | Si-8 | 3495 | 8.4 |
| 17[e] | Si-9 | 550 | 6 |
| 18[e] | Si-9 | 1523 | 6 |
| 19[e] | Si-10 | 150 | 6 |
| 20 | Si-11 | 144 | 6 |
| 21[e] | Si-11 | 1957 | 6 |
| 22[e] | Si-8 | 150 | 6 |
| 23[d] | Si-8 | 3000 | 6 |
| 24[e] | Si-1 | 350 | 4 |
| 25 | Si-11 | 157 | 4 |
| 26 | Si-11 | 3500 | 4 |
| 27 | Si-8 | 150 | 4 |

Explanations to Table 2: PO = propylene oxide; [a] Si - Si starter as listed in Table 1; [b] H$_2$O - total water concentration in PO (cH2O) [ppm], calculated as {100*(total mass of continuously added water in g)/[(total mass of continuously added water in g) + (total mass of continuously added alkylene oxide in g)]}; [c] BR-- Build ratio (Mass of the Si initiator to the total mass of the batch); [d] - water post treatment; [e] - H$_3$PO$_4$ post treatment; [f] - catalyst concentration 360 ppm; [g]-the first 50 wt.% of wet PO had a water concentration of 1096ppm, the second 50 wt.% had a water concentration of 150 ppm; [h]-- Activated starter containing 360 ppm of active DMC catalyst.

Table 3: Physicochemical properties of the polyether polyols products: synthesis examples from 1 to 3 and 5 to 27. Example 4 is a Reference Example (not according to the invention).

| No. | POIOH[a] | StartOH[b] | MW[c] | Visc[d] | Unsat[e] | PDI[f] |
|---|---|---|---|---|---|---|
| 1 | 6.4 | 18.6 | 17534 | 24180 | 0.007 | 1.06 |
| 2 | 6.4 | 18.6 | 17534 | 24270 | 0.01 | 1.11 |
| 3 | 10.4 | 18.6 | 10790 | 6402 | 0.01 | 1.09 |
| 4 | 17 | 18.0 | 6601 | 2145 | 0.01 | 1.22 |

(continued)

| No. | PolOH[a] | StartOH[b] | MW[c] | Visc[d] | Unsat[e] | PDI[f] |
|---|---|---|---|---|---|---|
| 5 | 10.7 | 18.6 | 10488 | 6684 | 0.007 | 1.13 |
| 6 | 10.3 | 54.2 | 10895 | 6509 | 0.008 | 1.08 |
| 6a | 10.19 | 56 | 11013 | 6200 | 0.01 | 1.14 |
| 7 | 14.0 | 17.6 | 8014 | 3239 | 0.01 | 1.12 |
| 8 | 14.8 | 56 | 7582 | 3159 | 0.008 | 1.06 |
| 9 | 14.6 | 110 | 7686 | 3187 | 0.01 | 1.11 |
| 10 | 6.46 | 32.9 | 17371 | 25500 | 0.007 | 1.11 |
| 11 | 18.6 | 56 | 6033 | 2049 | 0.01 | 1.08 |
| 12 | 18.7 | 110 | 6001 | 1850 | 0.01 | 1.12 |
| 13 | 29.6 | 110 | 3791 | 850 | 0.01 | 1.10 |
| 14 | 31.5 | 250 | 3562 | 810 | 0.01 | 1.14 |
| 15 | 40.4 | 250 | 2778 | 580 | 0.01 | 1.15 |
| 16 | 49.0 | 250 | 2290 | 400 | 0.01 | 1.11 |
| 17 | 6.2 | 18 | 18100 | 24300 | 0.01 | 1.18 |
| 18 | 11.0 | 18 | 10202 | 6200 | 0.01 | 1.16 |
| 19 | 9.9 | 54 | 11335 | 6320 | 0.01 | 1.12 |
| 20 | 19.4 | 112 | 5784 | 2050 | 0.01 | 1.14 |
| 21 | 28.7 | 112 | 3910 | 820 | 0.01 | 1.16 |
| 22 | 41.8 | 250 | 2685 | 495 | 0.01 | 1.12 |
| 23 | 56 | 250 | 2004 | 255 | 0.01 | 1.09 |
| 24 | 6.6 | 18,6 | 17003 | 24800 | 0.01 | 1.14 |
| 25 | 29.8 | 112 | 3766 | 920 | 0.01 | 1.16 |
| 26 | 45.0 | 112 | 2494 | 527 | 0.01 | 1.12 |
| 27 | 65.3 | 250 | 1718 | 180 | 0.01 | 1.11 |

Explanations to Table 3: [a] PolOH - hydroxyl number of the polyether diol product [mg KOH/g]; [b] StartOH - initiator OH number [mg KOH/g]; [c] MW - molecular weight calculated as 56110*2/(PolOH); [d] Visc - Viscosity at 25°C, see above for details of the measurement [mPas]; [e] Unsat - Unsaturation [mMol/kg]; [f] PDI - Polydispersity.

With the process according to the invention, polyether diols can be manufactured reliably on an industrial scale by adjusting the total water content c(H2O) according to the equation cH2O = (PolOH - A - B*StartOH)/C, wherein PolOH, A, B, and StartOH are as defined herein. Polyether diols with polydispersities below 1.5 were achieved reliably with this process. Moreover, a wide range of hydroxyl numbers (and therewith molecular weights) could be reliably synthesized starting from different starters.

## Claims

1. A method for the manufacture of a polyether diol product having a polyether hydroxyl number PolOH of from 4 to 120 mg KOH/g by reaction of an initial starter substance $S_i$ having two hydroxyl groups (initial starter $S_i$) with one or more alkylene oxides in the presence of water and a double metal cyanide (DMC) catalyst, comprising the steps of

   a. providing a starter mixture, comprising the initial starter $S_i$ and the DMC catalyst,
   b. continuously adding an alkylene oxide to the starter mixture,
   c. continuously adding water to the starter mixture,

wherein

i. steps b and c either start simultaneously or step b starts before step c, preferably steps b and c start simultaneously,

ii. the initial starter $S_i$ has a starter hydroxyl number StartOH of from 6 to 250 mg KOH/g,

iii. the water is added in such an amount that the concentration of the water, based on the total masses of the water and the alkylene oxide, is from 150 ppm to 3500 ppm,

iv. the build ratio BR, defined as the mass of polyether diol product divided by the mass of initial starter $S_i$ in the starter mixture, is at least 4,

v. the polydispersity index PDI of the polyether diol product is 1.5 or less, and PDI is calculated as Mw/Mn, wherein Mw and Mn are determined according to the method outlined in the description

vi. StartOH is 1.25*PolOH or larger,

vii. StartOH and PolOH are determined by ASTM D4274-16, met. D,

viii. the amount of the continuously added water is adjusted such that cH2O, calculated as {100*(total mass of continuously added water in g)/[(total mass of continuously added water in g) + (total mass of continuously added alkylene oxide in g)]} fulfills the equation

$$cH2O = (PolOH - A - B*StartOH)/C \qquad (1),$$

wherein

A is in mg KOH/g and is calculated as
A = 0.034*BR + 0.16,
B is calculated as
B = 0.0068*(BR)$^2$ - 0.1153*BR + 0.6098,
C is in mg KOH/g and is calculated as
C = -0.3836*(BR)$^2$ + 6.6482*BR + 24.48, and

ix. the ratio of PolOH/StartOH is in the range between 1 and 1/BR.

2. The method according to claim 1, wherein the build ratio BR is from 4 to 20, preferably from 4 to 15, more preferably from 5.5 to 10, even more preferably from 5.5 to 8.5, most preferred from 7.5 to 8.5.

3. The method according to any one of claims 1 or 2, wherein the continuously added alkylene oxide and the continuously added water are added at a ratio R = mass(water)/mass(alkylene oxide), wherein during addition of the water and of the alkylene oxide the ratio R remains constant or is variable, preferably, is variable in the range from 1 to 3500 ppm, preferably from 150 to 3500 ppm.

4. The method according to claim 3, wherein the ratio R is reduced to 1 to 150 ppm after 85 wt.% or more, preferably 90 wt.% or more, more preferably 95 wt.% or more of the alkylene oxide have been added.

5. The method according to any one of claims 1 to 4, wherein the water and the alkylene oxide are intimately mixed before being added to the starter mixture.

6. The method according to any one of claims 1 to 5, wherein the polyether diol product contains the DMC catalyst at a concentration of less than about 400 ppm, preferably less than about 300 ppm, more preferably less than about 100 ppm.

7. The method according to any one of claims 1 to 6, wherein the alkylene oxide is selected from the group consisting of ethylene oxide, propylene oxide, butylene oxide, styrene oxide, and mixtures thereof, preferably consisting of ethylene oxide, propylene oxide, and mixtures thereof, more preferably propylene oxide.

8. The method according to any one of claims 1 to 7, wherein the polyether diol product has a polyether hydroxyl number PolOH of from 4 to 112 mg KOH/g, preferably from 5 to 60 mg KOH/g, more preferably from 5 to 30 mg KOH/g, most preferably from 5 to 15 mg KOH/g.

9. The method according to any one of claims 1 to 8, wherein the initial starter has a starter hydroxyl number StartOH of from 14 to 250 mg KOH/g, preferably from 9 to 112 mg KOH/g, more preferably from 17 to 56 mg KOH/g.

10. The method according to any one of claims 1 to 9, wherein the method additionally comprises before steps b and c an activation step of adding an activation amount of an alkylene oxide having a water content below 200 ppm, preferably below 150 ppm, more preferably below 50 ppm, to the starter mixture to initiate the double metal cyanide catalyst.

11. The method according to claim 10, wherein the activation step has a duration of from 1 to 100 minutes, preferably from 5 to 60 minutes, and/or is conducted at a temperature from 90°C to 170°C, preferably from 100°C to 160°C, more preferably from 110°C to 150°C, and/or wherein the activation amount of alkylene oxide amounts to 2 wt.% to 40 wt.%, preferably 2 to 20 wt.%, based on the mass of the initial starter $S_i$.

12. The method according to any one of claims 1 to 11, wherein the total time of addition of the continuously added alkylene oxide is from 8 to 20 hours, preferably from 9 to 18 hours, more preferably from 10 to 15 hours.

13. The method according to any one of claims 1 to 12, wherein the alkylene oxide is added at an average rate of 1 to 20 wt.%, preferably 5 to 15 wt.%, of the total amount of alkylene oxide per hour.

14. The method according to any one of claims 1 to 13, wherein an acid is added to the polyether diol product after all of the alkylene oxide has been added to adjust the pH to a value below 7.0, preferably to a value of 5 to 6.9, more preferably from 5.8 to 6.8, wherein the pH value is determined by preparing a solution by dissolving 10 g of the polyether diol product in 60 mL of a mixture of isopropanol:water at a weight ratio of 10:6 and determining the pH value of the solution using a potentiometric pH meter.

15. The method according to claim 14, wherein the acid is an organic acid or an inorganic acid, preferably an inorganic acid, more preferably phosphoric acid.

16. The method according to any one of claims 1 to 15, wherein the polydispersity index PDI is 1.3 and below, preferably 1.15 and below, more preferably from 1.05 to 1.15.


**Patentansprüche**

1. Verfahren zur Herstellung von Polyetherdiolprodukt mit einer Polyether-Hydroxylzahl PolOH von 4 bis 120 mg KOH/g durch Umsetzung einer Ausgangsstartersubstanz $S_i$ mit zwei Hydroxylgruppen (Ausgangsstarter $S_i$) mit einem oder mehreren Alkylenoxiden in Gegenwart von Wasser und einem Doppelmetallcyanid-Katalysator (DMC), umfassend die Schritte

   a. Bereitstellen einer Startermischung, umfassend den Ausgangsstarter $S_i$ und den DMC-Katalysator,
   b. kontinuierliche Zugabe eines Alkylenoxids zur Startermischung,
   c. kontinuierliche Zugabe von Wasser zur Startermischung,

   worin

   i. Die Schritte b und c beginnen entweder gleichzeitig oder Schritt b beginnt vor Schritt c, vorzugsweise beginnen die Schritte b und c gleichzeitig,
   ii. der Ausgangsstarter $S_i$ eine Starter-Hydroxylzahl StartOH von 6 bis 250 mg KOH/g aufweist,
   iii. das Wasser in einer solchen Menge zugegeben wird, dass die Konzentration des Wassers, bezogen auf die Gesamtmassen des Wassers und des Alkylenoxids, 150 ppm bis 3500 ppm beträgt,
   iv. das Aufbauverhältnis BR, definiert als die Masse des Polyetherdiolprodukts geteilt durch die Masse des Ausgangsstarters in der Startermischung, mindestens 4 beträgt,
   v. der Polydispersitätsindex PDI des Polyetherdiolprodukts 1,5 oder weniger beträgt und PDI als Mw/Mn berechnet wird, wobei Mw und Mn nach der in der Beschreibung beschriebenen Methode bestimmt werden,
   vi. StartOH ist 1,25* PolOH oder größer,
   vii. StartOH und PolOH werden nach ASTM D4274-16, Met. D, bestimmt.
   viii. Die Menge des kontinuierlich zugegebenen Wassers wird so eingestellt, dass cH2O, berechnet als {100* (Gesamtmasse des kontinuierlich zugegebenen Wassers in g)/[(Gesamtmasse des kontinuierlich zugegebenen Wassers in g) + (Gesamtmasse des kontinuierlich zugegebenen Alkylenoxids in g)]} die Gleichung erfüllt

$$cH2O = ( PolOH - A - B^* StartOH )/C \qquad (1),$$

worin

A ist in mg KOH/g und wird wie folgt berechnet:

A = 0,034*BR + 0,16,
B wird berechnet als
B = 0,0068*(BR)$^2$- 0,1153*BR + 0,6098,
C ist in mg KOH/g und wird wie folgt berechnet:
C = -0,3836*(BR)$^2$+ 6,6482*BR + 24,48, und

    ix. das Verhältnis PolOH/StartOH liegt im Bereich zwischen 1 und 1/BR.

2. Verfahren nach Anspruch 1, wobei das Aufbauverhältnis BR 4 bis 20, vorzugsweise 4 bis 15, stärker bevorzugt 5,5 bis 10, noch stärker bevorzugt 5,5 bis 8,5 und am stärksten bevorzugt 7,5 bis 8,5 beträgt.

3. Verfahren nach einem der Ansprüche 1 oder 2, wobei das kontinuierlich zugegebene Alkylenoxid und das kontinuierlich zugegebene Wasser in einem Verhältnis R = Masse(Wasser)/Masse(Alkylenoxid) zugegeben werden, wobei während der Zugabe des Wassers und des Alkylenoxids das Verhältnis R konstant bleibt oder variabel ist, vorzugsweise im Bereich von 1 bis 3500 ppm, bevorzugt von 150 bis 3500 ppm variabel ist.

4. Verfahren nach Anspruch 3, wobei das Verhältnis R auf 1 bis 150 ppm reduziert wird, nachdem 85 Gew.-% oder mehr, vorzugsweise 90 Gew.-% oder mehr, besonders bevorzugt 95 Gew.-% oder mehr des Alkylenoxids zugegeben wurden.

5. Verfahren nach einem der Ansprüche 1 bis 4, wobei das Wasser und das Alkylenoxid vor der Zugabe zur Startermischung gründlich vermischt werden.

6. Verfahren nach einem der Ansprüche 1 bis 5, wobei das Polyetherdiolprodukt den DMC-Katalysator in einer Konzentration von weniger als etwa 400 ppm, vorzugsweise weniger als etwa 300 ppm, stärker bevorzugt weniger als etwa 100 ppm enthält.

7. Verfahren nach einem der Ansprüche 1 bis 6, wobei das Alkylenoxid ausgewählt ist aus der Gruppe bestehend aus Ethylenoxid, Propylenoxid, Butylenoxid, Styroloxid und Mischungen davon, vorzugsweise bestehend aus Ethylenoxid, Propylenoxid und Mischungen davon, besonders bevorzugt Propylenoxid.

8. Verfahren nach einem der Ansprüche 1 bis 7, wobei das Polyetherdiolprodukt eine Polyether-Hydroxylzahl PolOH von 4 bis 112 mg KOH/g, vorzugsweise von 5 bis 60 mg KOH/g, besonders bevorzugt von 5 bis 30 mg KOH/g, ganz besonders bevorzugt von 5 bis 15 mg KOH/g aufweist.

9. Verfahren nach einem der Ansprüche 1 bis 8, wobei der Ausgangsstarter $S_i$ eine Starter-Hydroxylzahl StartOH von 14 bis 250 mg KOH/g, bevorzugt von 9 bis 112 mg KOH/g, besonders bevorzugt von 17 bis 56 mg KOH/g aufweist.

10. Verfahren nach einem der Ansprüche 1 bis 9, wobei das Verfahren zusätzlich vor den Schritten b und c einen Aktivierungsschritt umfasst, bei dem eine Aktivierungsmenge eines Alkylenoxids mit einem Wassergehalt unter 200 ppm, vorzugsweise unter 150 ppm, stärker bevorzugt unter 50 ppm, zu der Startermischung gegeben wird, um den Doppelmetallcyanid-Katalysator zu initiieren.

11. Verfahren nach Anspruch 10, wobei der Aktivierungsschritt eine Dauer von 1 bis 100 Minuten, vorzugsweise von 5 bis 60 Minuten, aufweist und/oder bei einer Temperatur von 90°C bis 170°C, vorzugsweise von 100°C bis 160°C, besonders bevorzugt von 110°C bis 150°C durchgeführt wird und/oder wobei die Aktivierungsmenge an Alkylenoxid 2 Gew.-% bis 40 Gew.-%, vorzugsweise 2 bis 20 Gew.-%, bezogen auf die Masse des Ausgangsstarters beträgt.

12. Verfahren nach einem der Ansprüche 1 bis 11, wobei die Gesamtzeit der Zugabe des kontinuierlich zugegebenen Alkylenoxids 8 bis 20 Stunden, vorzugsweise 9 bis 18 Stunden, besonders bevorzugt 10 bis 15 Stunden beträgt.

13. Verfahren nach einem der Ansprüche 1 bis 12, wobei das Alkylenoxid mit einer durchschnittlichen Rate von 1 bis 20 Gew.-%, vorzugsweise 5 bis 15 Gew.-%, der Gesamtmenge an Alkylenoxid pro Stunde zugegeben wird.

14. Verfahren nach einem der Ansprüche 1 bis 13, wobei dem Polyetherdiolprodukt nach Zugabe des gesamten Alkylenoxids eine Säure zugesetzt wird, um den pH-Wert auf einen Wert unter 7,0, vorzugsweise auf einen Wert von 5 bis 6,9, stärker bevorzugt von 5,8 bis 6,8 einzustellen, wobei der pH-Wert durch Herstellen einer Lösung durch Auflösen von 10 g des Polyetherdiolprodukts in 60 ml einer Mischung aus Isopropanol:Wasser in einem Gewichtsverhältnis von 10:6, und Bestimmen des pH-Werts der Lösung unter Verwendung eines potentiometrischen pH-Meters, bestimmt wird.

15. Verfahren nach Anspruch 14, wobei die Säure eine organische Säure oder eine anorganische Säure, vorzugsweise eine anorganische Säure, besonders bevorzugt Phosphorsäure ist.

16. Verfahren nach einem der Ansprüche 1 bis 15, wobei der Polydispersitätsindex PDI 1,3 und darunter, vorzugsweise 1,15 und darunter, besonders bevorzugt 1,05 bis 1,15 beträgt.

**Revendications**

1. Procédé de fabrication d'un produit polyéther diol ayant un indice d'hydroxyle de polyéther PolOH compris de 4 à 120 mg KOH/g par réaction d'une substance d'une amorce initiale ayant deux groupes hydroxyle (l'amorce initiale $S_i$) avec un ou plusieurs oxydes d'alkylène en présence d'eau et d'un catalyseur au cyanure métallique double (DMC), comprenant les étapes suivantes :

   a. fournir un mélange de l'amorce, comprenant de l'amorce initiale $S_i$ et le catalyseur DMC,
   b. ajouter en continu un oxyde d'alkylène au mélange de l'amorce,
   c. ajouter en continu de l'eau au mélange de l'amorce,

   où

   i. les étapes b et c débutent soit simultanément, soit l'étape b débute avant l'étape c, de préférence les étapes b et c débutent simultanément,
   ii. l'amorce initiale $S_i$ a un indice d'hydroxyle de l'amorce StartOH de 6 à 250 mg KOH/g,
   iii. l'eau est ajoutée en une quantité telle que la concentration de l'eau, basée sur les masses totales de l'eau et de l'oxyde d'alkylène, soit de 150 ppm à 3 500 ppm,
   iv. le taux d'assemblage BR, défini comme la masse du produit polyéther diol divisée par la masse de l'amorce initiale dans le mélange de l'amorce, est d'au moins 4,
   v. l'indice de polydispersité PDI du produit polyéther diol est 1,5 ou moins, et le PDI est calculé comme Mw/Mn, où Mw et Mn sont déterminés selon la méthode décrite dans la description,
   vi. StartOH est 1,25* PolOH ou plus,
   vii. StartOH et PolOH sont déterminés selon la norme ASTM D4274-16, met. D,
   viii. la quantité d'eau ajoutée en continu est ajustée de telle sorte que cH2O, calculé comme {100*(masse totale d'eau ajoutée en continu en g)/[(masse totale d'eau ajoutée en continu en g) + (masse totale d'oxyde d'alkylène ajouté en g)]} remplisse l'équation

$$cH2O = (PolOH - A - B* StartOH)/C \qquad (1),$$

   où

   A est en mg KOH/g et est calculé comme
   A = 0,034*BR + 0,16,
   B est calculé comme
   B = 0,0068*(BR)$^2$ - 0,1153*BR + 0,6098,
   C est en mg KOH/g et est calculé comme
   C = -0,3836*(BR)$^2$ + 6,6482*BR + 24,48, et

   ix. le rapport PolOH/StartOH est compris entre 1 et 1/BR.

2. Procédé selon la revendication 1, dans lequel le taux d'assemblage BR est de 4 à 20, de préférence de 4 à 15, plus préférablement de 5,5 à 10, encore plus préférablement de 5,5 à 8,5, le plus préférablement de 7,5 à 8,5.

3. Procédé selon l'une quelconque des revendications 1 ou 2, dans lequel l'oxyde d'alkylène ajouté en continu et l'eau ajoutée en continu sont ajoutés selon un rapport R = masse (eau)/masse (oxyde d'alkylène), dans lequel pendant l'ajout de l'eau et de l'oxyde d'alkylène le rapport R reste constant ou est variable, de préférence, est variable dans la plage de 1 à 3500 ppm, de préférence de 150 à 3500 ppm.

4. Procédé selon la revendication 3, dans lequel le rapport R est réduit à 1 à 150 ppm après que 85 % en poids ou plus, de préférence 90 % en poids ou plus, plus préférablement 95 % en poids ou plus de l'oxyde d'alkylène ont été ajoutés.

5. Procédé selon l'une quelconque des revendications 1 à 4, dans lequel l'eau et l'oxyde d'alkylène sont intimement mélangés avant d'être ajoutés au mélange de l'amorce.

6. Procédé selon l'une quelconque des revendications 1 à 5, dans lequel le produit polyéther diol contient le catalyseur DMC à une concentration inférieure à environ 400 ppm, de préférence inférieure à environ 300 ppm, plus préférablement inférieure à environ 100 ppm.

7. Procédé selon l'une quelconque des revendications 1 à 6, dans lequel l'oxyde d'alkylène est choisi dans le groupe composé de l'oxyde d'éthylène, l'oxyde de propylène, l'oxyde de butylène, l'oxyde de styrène et leurs mélanges, de préférence composé de l'oxyde d'éthylène, l'oxyde de propylène et leurs mélanges, plus préférablement l'oxyde de propylène.

8. Procédé selon l'une quelconque des revendications 1 à 7, dans lequel le produit polyéther diol a un indice d'hydroxyle de polyéther PolOH de 4 à 112 mg KOH/g, de préférence de 5 à 60 mg KOH/g, plus préférablement de 5 à 30 mg KOH/g, le plus préférablement de 5 à 15 mg KOH/g.

9. Procédé selon l'une quelconque des revendications 1 à 8, dans lequel l'amorce initiale a un indice d'hydroxyle de l'amorce StartOH de 14 à 250 mg KOH/g, de préférence de 9 à 112 mg KOH/g, plus préférablement de 17 à 56 mg KOH/g.

10. Procédé selon l'une quelconque des revendications 1 à 9, dans lequel le procédé comprend en outre avant les étapes b et c une étape d'activation consistant en ajouter une quantité d'activation d'un oxyde d'alkylène ayant une teneur en eau inférieure à 200 ppm, de préférence inférieure à 150 ppm, plus préférablement inférieure à 50 ppm, au mélange de l'amorce pour amorcer le catalyseur au cyanure métallique double.

11. Procédé selon la revendication 10, dans lequel l'étape d'activation a une durée de 1 à 100 minutes, de préférence de 5 à 60 minutes, et/ou est réalisée à une température de 90 °C à 170 °C, de préférence de 100 °C à 160 °C, plus préférablement de 110 °C à 150 °C, et/ou dans lequel la quantité d'activation d'oxyde d'alkylène s'élève à 2 % en poids à 40 % en poids, de préférence de 2 à 20 % en poids, par rapport à la masse de l'amorce initiale $S_i$.

12. Procédé selon l'une quelconque des revendications 1 à 11, dans lequel le temps total d'ajout de l'oxyde d'alkylène ajouté en continu est de 8 à 20 heures, de préférence de 9 à 18 heures, plus préférablement de 10 à 15 heures.

13. Procédé selon l'une quelconque des revendications 1 à 12, dans lequel l'oxyde d'alkylène est ajouté à un taux moyen de 1 à 20 % en poids, de préférence de 5 à 15 % en poids, de la quantité totale d'oxyde d'alkylène par heure.

14. Procédé selon l'une quelconque des revendications 1 à 13, dans lequel un acide est ajouté au produit polyéther diol après que la totalité de l'oxyde d'alkylène a été ajoutée pour ajuster le pH à une valeur inférieure à 7,0, de préférence à une valeur de 5 à 6,9, plus préférablement de 5,8 à 6,8, dans lequel la valeur du pH est déterminée en préparant une solution en dissolvant 10 g du produit polyéther diol dans 60 mL d'un mélange d' isopropanol:eau à un rapport pondéral de 10:6 et en déterminant la valeur du pH de la solution à l'aide d'un pH-mètre potentiométrique.

15. Procédé selon la revendication 14, dans lequel l'acide est un acide organique ou un acide inorganique, de préférence un acide inorganique, plus préférablement l'acide phosphorique.

16. Procédé selon l'une quelconque des revendications 1 à 15, dans lequel l'indice de polydispersité PDI est de 1,3 et moins, de préférence de 1,15 et moins, plus préférablement de 1,05 à 1,15.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3829505 A
- US 10457775 B
- US 6780813 B
- US 20080021191 A1
- US 5777177 A
- WO 9803571 A1
- WO 2017003748 A1
- WO 2020131610 A1
- US 2008021191 A1
- US 20060167209 A1
- ES 2313011
- EP 1767563 B1
- US 10669368 B2
- US 5158922 A
- US 4477589 A

- US 3427334 A
- US 3941849 A
- US 5470813 A
- US 5482908 A
- EP 0700949 A2
- EP 0743093 A1
- EP 761708 A2
- WO 9740086 A1
- WO 9816310 A1
- WO 0047649 A1
- EP 1789378 A2
- CN 100999573 A
- PL 398518 A1
- EP 2065427 A1